# EUROPEAN PATENT APPLICATION

(11) **EP 1 479 299 A1**
(43) Date of publication of application: **24.11.2004**
(21) Application number: 02792031.3
(22) Date of filing: 26.12.2002
(51) Int. Cl.: A23L 1/28

(54) **PROCESS FOR PRODUCING NUCLEIC ACID-RICH YEAST EXTRACT AND NUCLEIC ACID-RICH YEAST EXTRACT**

(30) Priority: 26.12.2001 JP 2001394691
(71) Applicant: SAPPORO BREWERIES LTD., Tokyo 150-8686 (JP)
(72) Inventor: IKEUCHI, Satoshi, c/o Sapporo Breweries Ltd., Yaizu-shi, Shizuoka 425-0013 (JP); KADO, Hisao, c/o Sapporo Breweries Ltd., Shibuya-ku, Tokyo 150-8686 (JP)
(74) Representative: VOSSIUS & PARTNER
(86) International application number: PCT/JP2002/013715
(87) International publication number: WO 2003/055333

(57) **Abstract**

A method for producing a nucleic acid-rich yeast extract from a yeast cell suspension by an enzyme addition method, wherein the pH of the yeast cell suspension is first adjusted to neutral or alkaline (6.5-11.0), and the suspension is heated to a prescribed temperature (70-95°C) to produce a nucleic acid-rich yeast extract.

## Description

### Technical Field

The present invention relates to a method for producing a nucleic acid-rich yeast extract, and to a nucleic acid-rich yeast extract.

### Background Art

Yeast extract, like meat extract, vegetable extract, fish extract and the like, is used as a natural flavoring and has complex gustatory character including savour, acidity, bitterness and richness not found in chemical flavorings, and it has come into more common use in recent years as a food material. The known gustatory components of yeast extract include amino acids, peptides, nucleic acids such as 5'-nucleotides, saccharides and organic acids, but the nucleic acid content is of particular importance for flavoring. Such nucleic acids are used not only as raw materials for savory flavorings, in the case of 5'-inosinic acid (IMP) 'and 5'-guanylic acid (GMP), for example, but also as materials for pharmaceuticals.

One approach used in the past has been to increase the nucleic acid content of yeast cells. For example, U.S. Patent No. 3,909,352 describes mutating *Candida* yeast and separating out the KCl-sensitive strains to obtain yeast cells containing ≥12% ribonucleic acid in the solid portion (dry cells). Also, Japanese Unexamined Patent Publication HEI No. 11-196859 discloses separating cold-sensitive mutants derived from *Candida utilis* to obtain yeast cells containing ≥20% ribonucleic acid in the solid portion.

Brewer's yeast used in beer brewing is washed after beer production and the heat-dried cells are used for production of health foods and yeast extract, since the safety thereof has been widely recognized. Nevertheless, since yeast cells recovered after beer production have a ribonucleic acid content of only about 4-6% in the solid portion, they have been considered inadequate as a raw material for commercial extraction of ribonucleic acid.

Efforts have therefore been directed toward increasing ribonucleic acid content in *Candida* yeast, rather than *Saccharomyces* strains including baker's yeast. Yet, research is still conducted on methods of augmenting ribonucleic acids using *Saccharomyces* yeast, which is known to be more useful as a food product than Candida and is widely recognized as being safe. For example, a method has been proposed for increasing ribonucleic acid in cells of the baker's yeast *Saccharomyces cerevisiae* by limiting the potassium sulfate culture conditions (Japanese Unexamined Patent Publication HEI No. 5-176757). This method yields cells having a ribonucleic acid content of 10% or greater.

On the other hand, methods for obtaining gustatory nucleic acid-rich yeast extracts from yeast cell suspensions are known, such as the method disclosed in Japanese Unexamined Patent Publication SHO No. 62-201595, wherein the yeast extract is obtained after heating the yeast cell suspension to 80-100°C.

### Disclosure of the Invention

While yeast with high cellular nucleic acid content can be obtained by the aforementioned methods, it is not always easy to efficiently extract the nucleic acid from the yeast cells, and therefore an improved method for producing nucleic acid-rich yeast extract has been desired. Moreover, even when yeast extract is obtained by the method described in Japanese Unexamined Patent Publication SHO No. 62-201595, the gustatory nucleic acid content of the yeast extract has not been consistently adequate.

It is an object of the present invention, which has been accomplished in light of these circumstances of the prior art, to provide a method for efficiently producing yeast extract with a high nucleic acid content from yeast cells.

As a result of much diligent research directed toward achieving the aforestated object, the present inventors have completed this invention based on the discovery that, when obtaining yeast extract by an enzyme addition method from a yeast cell suspension, nucleic acid-rich yeast extract can be obtained by adjusting the pH of the yeast cell suspension to the neutral or alkali range prior to heat treatment.

More specifically, the method for producing a nucleic acid-rich yeast extract according to the invention is a method comprising
a step of adjusting the pH of a yeast cell suspension to the neutral or alkali range and then heat treating it to a prescribed temperature, and
a step of obtaining a yeast extract from the yeast cell suspension by an enzyme addition method.

The yeast cell suspension which has been heat treated to the prescribed temperature in the method for producing the nucleic acid-rich yeast extract according to the invention is preferably held for an additional period of time (preferably 1-3 hours) at the same prescribed temperature. Carrying out this further step will tend to yield a yeast extract with a further augmented nucleic acid content.

Also, the pH during the heat treatment in the method for producing a nucleic acid-rich yeast extract according to the invention is preferably a pH in the range of 6.5 to 11.0, and the prescribed temperature for the heat treatment is preferably a temperature in the range of 70-95°C. Production of the yeast extract under these conditions 'will tend to yield yeast extract with a further augmented nucleic acid content.

Also, the yeast used in the method for producing a nucleic acid-rich yeast extract according to the invention may be ribonucleic acid-rich yeast having a cellular ribonucleic acid content of 10 wt% or greater. Using such yeast in combination with the method of the invention will tend to yield yeast extract with an even further augmented nucleic acid content.

The nucleic acid-rich yeast extract of the invention is characterized by being obtained by the nucleic acid-rich extract production method of the invention. Since the yeast extract contains a very large amount of highly gustatory nucleic acid, it is not only advantageous as a source for food materials but is also highly advantageous as a starting material for pharmaceuticals.

### Brief Description of the Drawings

Fig. 1 is a graph showing the relationship between heat treatment temperatures and treatment times for yeast cell suspensions, and gustatory nucleic acid contents in obtained yeast extracts.
Fig. 2 is a graph showing the relationship between yeast cell suspension pH values and gustatory nucleic acid contents in obtained yeast extracts.

### Best Mode for Carrying Out the Invention

A preferred mode of the invention will now be explained in detail.

The method for producing nucleic acid-rich yeast extract according to the invention is characterized by being a method for producing yeast extract from a yeast cell suspension by an enzyme addition method, wherein the pH of the yeast cell suspension is first adjusted to the alkali range prior to heat treatment at a prescribed temperature.

The yeast cells used for the invention will be explained first.

The "yeast" according to the invention is not particularly restricted so long as it is a species which can be used for production of yeast extract, and there may be mentioned brewer's yeast or baker's yeast such as *Saccharomyces cerevisiae*, as well as yeast of other *Saccharomyces* strains, *Candida, Pichia, Hansenula,* and the like. The yeast may be freshly cultured for production of the yeast extract, or it may be yeast which has been used for brewing of beer, low-malt beer (happoshu), sake or the like.

The yeast used for the invention is not limited to the yeast mentioned above, and may be yeast pretreated to produce an augmented nucleic acid content in the yeast cells.

For example, it may be yeast having an augmented nucleic acid content obtained by introducing the yeast cells into a medium containing yeast-activating components (such as a medium used for culturing of yeast) and subjecting them to aerobic activation treatment while stirring at a prescribed temperature. Brewer's yeast used for production of malt liquor beverages such as beer and happoshu may be suitably used as the starting material. Also, a wet yeast slurry may be filtered and washed and then provided for production of ribonucleic acid-rich yeast. A suspension may alternatively be prepared from dry yeast produced by pH adjustment and heat treatment according to the invention.

When yeast extract is produced by enzyme addition in the method for producing a nucleic acid-rich yeast extract according to the invention, the pH of the yeast cell suspension is first adjusted to the neutral or alkali range, prior to heat treatment to the prescribed temperature. The pH of the yeast cell suspension during the heat treatment will be in the neutral or alkali range, but is preferably 6.5-11.0 and more preferably 7.0-11.0. The nucleic acid content of the yeast extract will not increase if the pH is in the acidic range. Also, although a pH of higher than 11.0 will not reduce the nucleic acid content of the yeast extract, it will create a steady state with no further notable increase in nucleic acid content, while in some cases the resulting yeast extract may exhibit coloration.

The heat treatment in the method for producing a nucleic acid-rich yeast extract according to the invention is not particularly restricted so long as it creates a condition which inactivates enzymes such as nucleases (especially ribonucleases), proteases, phosphatases and the like present in yeast cells, but the prescribed temperature is preferably 70-95°C and more preferably 75-90°C. A temperature below this range will tend to result in inadequate enzyme inactivation and therefore a lower nucleic acid content in the yeast extract, while a temperature above this range may result in undesirable effects on the yeast extract, such as a scorched odor or coloration. Once the temperature of the yeast cell suspension has reached the aforementioned prescribed temperature, it may be removed from the heating and either allowed to stand or cooled, but it is preferably further treated by holding at the same prescribed temperature for an additional period of time (preferably 1-3 hours). Such treatment will tend to further augment the nucleic acid content. However, treatment for a period exceeding 3 hours may have an undesirable effect on the product, such as a scorched odor or coloration.

A method of obtaining yeast extract by enzyme addition according to the invention will now be explained. The enzyme addition method used to obtain the yeast extract may be carried out by a publicly known procedure. For example, the aforementioned pH adjustment and heat treatment may be followed by addition of a nuclease and protease to the yeast cell suspension for decomposition of the nucleic acids and proteins, and then deaminase treatment. The enzyme treated yeast cell suspension may be used for solid/liquid separation by centrifugation, and the supernatant subjected to enzyme inactivation, concentration, sterilization, pH adjustment, etc. by established methods to obtain a yeast extract. Alternatively, the dry enzyme produced by the aforementioned pH adjustment and heat treatment may be suspended in water and the resulting enzyme cell suspension used. The temperature for enzyme treatment will normally be 40-70°C, the pH will normally be about 5.0-7.5, and the reaction time will normally be about 2-20 hours.

The nucleic acid-rich enzyme extract obtained in this manner contains a significantly higher content of nucleic acid than other extracts, from yeast cells having the same nucleic acid content, and the nucleic acid-rich enzyme extract can be efficiently obtained by the very simple treatment of heating and pH adjustment. It is therefore possible to easily obtain yeast extracts which, because of their very high content of strongly gustatory nucleic acids, are not only advantageous as sources for food materials, but are also highly advantageous as starting materials for pharmaceuticals and as nutrient sources for microbial growth.

### [Examples]

The invention will now be explained in greater detail by examples, with the understanding that the examples are in no way limitative on the invention.

### (Examples 1-3, Reference Examples 1-12 and Comparative Examples 1-2)

### 1. Preparation of yeast extracts

Yeast (yeast slurry) obtained from a beer factory was filtered and washed. The pH of the obtained yeast solution (yeast cell suspension) was about 5-6 (pH 5.8). After treating the yeast solution under the conditions shown below, it was dried by a spray drying method to prepare 13 different samples for experimentation.
(1) Heating for 10 minutes at 80-100°C
   (Ordinary cell enzyme inactivation treatment alone: Comparative Example 1)
(2) Heating to 60°C, followed by rapid cooling (Reference Example 1)
(3) Heating to 60°C, followed by incubation for 1 hour and rapid cooling (Reference Example 2)
(4) Heating to 60°C, followed by incubation for 2 hours and rapid cooling (Reference Example 3)
(5) Heating to 60°C, followed by incubation for 3 hours and rapid cooling (Reference Example 4)
(6) Heating to 75°C, followed by rapid cooling (Reference Example 5)
(7) Heating to 75°C, followed by incubation for 1 hour and rapid cooling (Reference Example 6)
(8) Heating to 75°C, followed by incubation for 2 hours and rapid cooling (Reference Example 7)
(9) Heating to 75°C, followed by incubation for 3 hours and rapid cooling (Reference Example 8)
(10) Heating to 90°C, followed by rapid cooling (Reference Example 9)
(11) Heating to 90°C, followed by incubation for 1 hour and rapid cooling (Reference Example 10)
(12) Heating to 90°C, followed by incubation for 2 hours and rapid cooling (Reference Example 11)
(13) Heating to 90°C, followed by incubation for 3 hours and rapid cooling (Reference Example 12)

Each of the dry yeast samples was treated in the following manner according to an established method, to obtain yeast extracts. Specifically, warm water at 60°C was added to 40 g of dry yeast material to 400 g. After confirming a temperature of 60°C for the yeast suspension, hydrochloric acid was added to adjust the pH to 5.3. After pH adjustment, 0.16 g each of Amano nuclease (Amano Pharmaceutical Co., Ltd.) and papain (Amano Pharmaceutical Co., Ltd.) (0.04 wt% with respect to the dry yeast) was added, and reaction was conducted for 3 hours. Upon completion of the reaction, solid/liquid separation was carried out by centrifugation, and the supernatant was treated with an autoclave at 90°C for 30 minutes for enzyme inactivation. After the autoclaving, filtration was performed with diatomaceous earth, the pH was adjusted to 5.5, and then salt was added to a concentration of about 14%. The solution was concentrated and treated at 121°C for 1 minute for sterilization to obtain an enzyme extract sample.

### 2. Assay of nucleic acid content

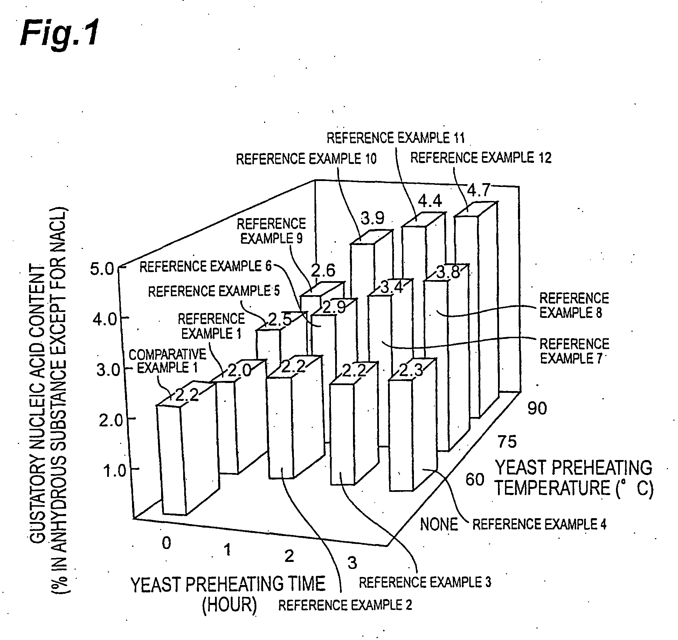

The nucleic acid contents of the 13 prepared yeast extract samples were assayed. The nucleic acid content for each of the enzyme extracts in this case represents the gustatory nucleic acid content, where the gustatory nucleic acid content is the total of heptahydrates of the disodium salts of IMP (5'-inosinic acid) and GMP (5'-guanylic acid). Fig. 1 shows the results of the nucleic acid content assays.

As shown in Fig. 1, the yeast heated at 60°C had no significant change in nucleic acid content of the yeast extract even with variation of the heating time from 1 to 3 hours, and only differed slightly from conventional enzyme inactivation. treatment alone (Comparative Example 1). The yeast heated at 75°C exhibited an increase of 15-20% with increasing heating time, compared to enzyme inactivation treatment alone. The yeast heated at 90°C exhibited an increase of 50% with a heating time of 1 hour, and an additional 20% with a heating time of 2 hours. Further heat treatment at 75-90°C for 1-3 hours resulted in a notable increase in gustatory nucleic acid content of the yeast extracts.

### 3. Relationship between heat treatment and pH

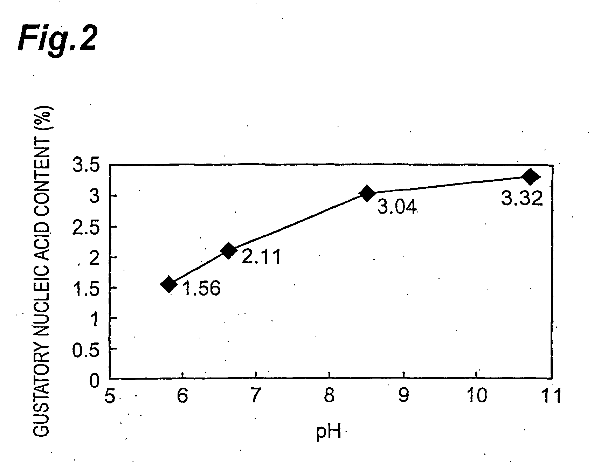

An experiment was conducted to determine whether varying the pH of the enzyme solution (enzyme cell suspension) for the heat treatment described above results in a change in gustatory nucleic acids in the yeast extract. Specifically, yeast extracts were obtained by the same method described above, except that the pH of an enzyme solution at pH 5.8 (Comparative Example 2) was adjusted to 6.63 (Example 1), 8.50 (Example 2) and 10.73 (Example 3), and the gustatory nucleic acid contents were then assayed. As shown in Fig. 2 and Table 1, the gustatory nucleic acid content increased markedly within the range from neutral to alkali pH. The temperature conditions and heating time were 90°C and 1 hour, respectively.

**Table 1**

| | Comparative Example 1 | Example 1 | Example 2 | Example 3 |
|---|---|---|---|---|
| Yeast extract Lot No. | 1 | 2 | 3 | 4 |
| pH before pH adjustment | 5.80 | | | |
| pH after pH adjustment | 5.80 | 6.63 | 8.50 | 10.73 |
| Gustatory nucleic acid content (%) (5' -I+G) | 1. 56 | 2. 11 | 3.04 | 3. 32 |

Thus, it was demonstrated that varying the pH of the yeast solution to neutral (pH 6.63) from the original pH (pH 5.80) increased the nucleic acid content of the yeast extract by approximately 35-51%. Further adjustment of the pH toward the alkali range (pH 8.50) increased the nucleic acid content by about 95%, and increase to the strongly alkaline range (pH 10.73) resulted in a nucleic acid content increase of about 114%.

### Industrial Applicability

As explained above, the method for producing nucleic acid-rich yeast extract according to the present invention is a method which allows efficient production of yeast extract with a high nucleic acid content from yeast cells.

## Claims

1. A method for producing a nucleic acid-rich yeast extract comprising
a step of adjusting the pH of a yeast cell suspension to the neutral or alkali range and then heating it to a prescribed temperature, and
a step of obtaining a yeast extract from the yeast cell suspension by an enzyme addition method.

2. The method of claim 1, wherein the yeast cell suspension which has been heat treated to the prescribed temperature is held for an additional period of time at the same prescribed temperature.

3. The method of claim 1, wherein the pH is a pH in the range of 6.5 to 11.0.

4. The method of claim 1, wherein the prescribed temperature is a temperature in the range of 70-95°C.

5. The method of claim 2, wherein the prescribed time is a time in the range of 1-3 hours.

6. The method of claim 1, wherein the yeast is .ribonucleic acid-rich yeast having a cellular ribonucleic acid content of 10 wt% or greater.

7. A nucleic acid-rich yeast extract obtained by a method for producing a nucleic acid-rich yeast extract according to any one of claims 1 to 6.
